# EUROPEAN PATENT APPLICATION

(11) **EP 1 304 626 A1**
(43) Date of publication of application: **23.04.2003**
(21) Application number: 01124298.9
(22) Date of filing: 18.10.2001
(51) Int. Cl.: G06F 17/30

(54) **Managing modified documents**

(71) Applicant: Sun Microsystems, Inc., Palo Alto, California 94303-4900 (US)
(72) Inventor: Laux, Thorsten O., 20099 Hamburg (DE); Bauer, Mathias, 22559 Hamburg (DE)
(74) Representative: HOFFMANN - EITLE

(57) **Abstract**

Processing unit and method for handling a plurality of data files allowing improved user options in handling modification, particularly in a distributed system such as a client server environment. A data file detection unit is provided for detecting modified data files, which were modified since a last storing operation. A unit maintains a modification list which identifies each modified data file. Thus, even if a user discards e.g. subframes displaying a modified document, modifications are maintained in association with the modification list and a decision on discarding or saving the modifications may be made at a later point in time.

## Description

### Field of the invention

The invention relates to a processing unit and method for handling a plurality of data files.

### Background of the invention

Data processing devices are used for the widest range of increasingly versatile applications, providing services ranging from, for example, editing of text documents or spread sheet applications to complex software systems, e.g. for computer aided design or manufacturing, purchasing, computer aided banking applications and similar. Further, increasingly complex software applications are employed in the field of personal services, for example for personal data organization, mobile communication applications, such as mobile telephones or hand-held computing devices, or communication services and other services, provided over computer networks such as the Internet.

The more elements a computer aided application comprises and the more computing devices are involved in providing a particular service, e.g. over a computer network, the more important it is to assure that all elements of the computerized application know about relevant operations and statuses of the other elements of the application.

In an application involving a plurality of data processing devices cooperating with one another, a user may for example input instructions at one data processing device for effecting operations at another data processing device.

Further, in a complex application executed on a single data processing device, one element of the application may issue an instruction to another element of the application to perform certain services. In any of these cases, it is important that all elements of the application, or data processing devices are aware of these commands or operations.

As an example, a text processing application is considered. If a user selects a text document and issues an instruction to open the same, the text processing application obtains and effects a display of the document. Generally, the user may then edit this document using e.g. a graphical user interface. For example, a user could enter text through a keyboard, while reviewing the changes to the text document on a display. From time to time or after the last modifying operation, the user may choose to save the text document, as known in the art.

If, however, during editing and before saving, changes to the text document the user decides to interrupt the text editing operations by discarding for example a module of the text processing application, by launching another application, or performing any other activity, it is important to notify the text processing application regarding this new activity of the user, i.e. that the text editing operation has been interrupted or even terminated. The text processing application could then either remain active in the background, invisible to the user, awaiting renewed activation, or could be terminated.

If the application is terminated, it is important to provide the user with an option to either save the modifications to the text document, to discard the modifications, or to resume editing of the text document, i.e. to abort the termination procedure.

While the above functionality can be easily implemented in a "closed" environment, such as an operating system on a personal computer or similar, where all applications and interactions can be easily tracked; particularly in distributed applications such as applications being carried out using a plurality of data processing devices in a computer network, realizing the above outlined functionality may be difficult. In the above example, if a user interacts with the text processing application through a graphical user interface residing on one data processing device, while the main part of text processing application is located on another data processing device, the user could intentionally or accidentally terminate the graphical user interface part of the application during an editing process before saving changes to the text document, in which case the modifications may be lost, or forcedly saved without giving the user any options. This problem may be particularly severe in distributed applications involving the Internet, or any computer network, where communications between data processing devices controlling parts of an application, such as the above text processing application, could be interrupted, or where a the parts of the application could be independently terminated.

### Summary of the invention

It is therefore desirable to facilitate an improved managing of data files improving user control options.

According to an example a client unit for handling a plurality of data files includes a data file detection unit for detecting at least one modified data file which was modified since a last saving operation; and a large unit for maintaining a modification list with an identifier for each of the at least one modified data file. Accordingly, the processing unit, e.g. part of the distributed system of processing units, maintains information on modified data files, allowing an improved handling of modified data files and improving user options for handling modified data files.

The log unit may be ranged to record the identifier of the modified data file in the modification list and to present the modification list to a user upon detecting the modified data file. Accordingly, the user can advantageously view the list the modified data files, in order to maintain an overview of all modified data files.

The identifier may include a link to the modified data file, allowing a user for example to select the identifier in order to access the modified data file, for example, if a display window displaying the modified data file was discarded or otherwise lost.

Moreover, the processing unit may be arranged to communicate with a browser for browsing through data in a network of data processing devices. Thus, the data files can advantageously be handled in connection with a browser, e.g. remotely. Further, the identifier may be constituted by a file name of the modified data file and the link to the modified data file may be constituted by a URL. Accordingly, the user may view, in the modification list, file names of the modified data files and access the modified data files over a network such as the Internet, using the link associated with the identifier, e.g. if a window displaying the modified data file was discarded.

Moreover, the log unit may be arranged to effect displaying the modification list in a subframe on a display. Thus, the user may handle the modification list as a regular display window for improved user interaction.

The log unit may further be arranged to offer, in association with the subframe displaying the modification list, user options to perform at least one of the operations of; - save the at least one modified data file; - discard the changes of the at least one modified data file; - discard the entire at least one modified data file; and - continue modifying the at least one data file. Thus, a user has superior control with respect to saving or discarding the modifications.

The log unit may also be arranged to display the subframe with the modification list as a floater window or browser window, and to execute, upon a discard instruction, one of - saving modifications of the at least one modified data file; and - discarding modifications of the modified file. Thus, if the modification list is displayed in a floater window, or a browser window, i.e. a window which is associated with an application program, e.g. the user can still pre-define a default save operation or a default discard operation of modifications upon removing the modification list.

The log unit may be arranged to save all modified documents upon detection of a discard instruction in a separate memory partition; and maybe arranged to include all modified documents into the modification list upon a later restart operation. Thus, for example, upon an unexpected communication breakdown, all modified documents can be saved in an emergency saving operation while leaving the original data file unchanged, and, upon a restart operation, the modification list with the modified documents can again be displayed for user interaction. The user may thus decide at a later point in time, e.g. after re-establishing communications, to save or discard modifications.

Still further, the log unit may be arranged to display the subframe with the modification list as a system window, and to offer, upon a discarded instruction, user options including at least one of - saving modifications of the at least one modified data file; - discarding modifications of the at least one modified data file and resuming modifying the data file. Thus, with the modification list being displayed as a system window, i.e., linked to the operating system, the user may be provided with the option to save or discard the modifications.

Moreover, the log unit may be arranged to prompt a user upon a log-out instruction for ending a work session to instruct one of: - saving modifications of the at least one modified data file; - discarding modification of the modified data file; and - resume modifying the data file. Thus, even upon a log-out instruction, the user may decide how to proceed with the unsaved modifications.

The processing unit may be located at a server site and may remotely communicate with a client site. Thus, the application can be applied to a server and client system, e.g. for using network applications.

The data files may be located at the server site and may be remotely handled by a user operating the client site. Thus, a user can interact with the server, storing the data files through the client's site, e.g. for editing operations.

The log unit may finally be arranged to maintain a subframe with the modification list active, if a subframe at the client unit displaying the modified data file is discarded; and to open a subframe with the modified data file at the client unit upon a selection of the link to the modified data file. Thus, even if the modified data file is discarded, as the modification list remains active, the modified document can be again retrieved upon a corresponding selection operation.

According to another example, a message for handling a plurality of data files includes detecting at least one modified data file which was modified since a last saving operation; and maintaining a modification list with an identifier for each of the at least one modified data file.

Further, a program may be provided, having instructions adopted to carry out the above operations. Still further, a computer-readable medium may be provided, in which a program is embodied, where the program is to make a computer execute the operations outlined above. And, a computer program product comprising the computer-readable medium may be provided.

Further, advantageous features of the application are outlined in further dependent claims.

### Brief description of the drawings

- Fig. 1: shows an arrangement for handling a plurality of data files according to a first embodiment of the application;

- Fig. 2: shows operations for handling a plurality of data files according to another embodiment of the application, outlining operations for detecting modified data files and maintaining a modification list;

- Fig. 3: shows operations for handling a plurality of data files according to an embodiment of the application, outlining operations related to maintaining the modification list;

- Fig. 4: illustrates operations for handling a plurality of data files according to another embodiment of the application, outlining the user options how to proceed with directed modifications;
- Fig. 5: shows a client and server system for handling a plurality of data files according to another embodiment of the application;
- Fig. 6: outlines operations for handling a plurality of data files according to an embodiment of the application, particularly outlining options upon a log out or exit operation closing down a connection between a server unit and a client unit involved in handling a data file;
- Fig. 7: shows another embodiment for handling a plurality of data files, particularly outlining operations to proceed upon a discard instruction regarding a modified document;
- Fig. 8: shows a further embodiment for handling a plurality of data files, as they may be carried out in a client and server scenario;
- Fig. 9: shows operations of another embodiment of the application, particularly outlining options to proceed in connection with a discard instruction; and
- Fig. 10: shows operations of an embodiment of the application for handling a plurality of data files, particularly outlining further options upon discard instructions.

### Detailed description of the preferred embodiments

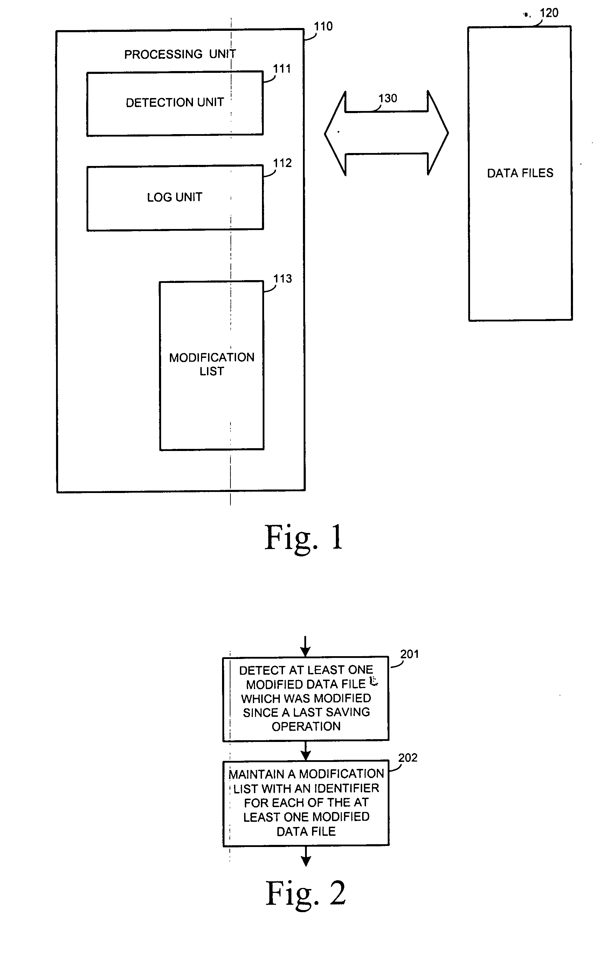

In the following an embodiment of the application will be described with respect to Fig. 1.

Fig. 1 shows a block diagram of a processing unit for handling a plurality of data files according to an embodiment of the application, particularly illustrating the individual elements of the processing unit.

The processing unit, shown at 110, includes a data file detection unit 111 an a log unit 112. Further, a modification list 112, further a modification list 113 is included in the processing unit 110. Further, the processing unit 110 has access to data files illustrated at 120, as shown by the arrow denoted 130.

The data file detection unit 110 is arranged for detecting at least one modified data file, e.g. of the data files shown at 120, which was modified since a last saving operation. Further, the log unit 112 is provided for maintaining a modification list with an identifier for each of the detected at least one modified data file.

The present example allows to maintain information on all data files which were modified during a session eliminating the need that all elements of a for example distributed system know about respective modified data files. Thus, if for example parts of an application are intentionally or accidentally terminated, the processing unit still maintains information on modified unsaved data files, allowing the user or another application to decide at a later point in time on how to proceed with the modifications.

For example, a user, closing a graphical user interface allowing to interact with a text processing application, may not be able to decide on how to proceed with modifications introduced, i.e., whether to save or discard the modifications. However, according to the present example, the processing unit maintains the modification list with all data files being modified unsaved, allowing a decision on how to proceed with the modification at a later point in time.

Having the modification list including identifiers of the modified unsaved data files, the user may go back to each one of the modified documents at an arbitrary point in time. Upon a corresponding selection of one of the data files of the modification list, the processing unit may trigger a renewed display of the respective data file and may give the user the opportunity to decide on the further proceeding. Further, as the modification list provides information on which documents are still being open, the present example may help to indicate what still is to be done. More specifically, the user could select a data file of the modification list by simply clicking on the respective identifier of the data file, triggering a display of the data file or at least parts thereof. In this case, if an application or a part of an application displaying the respective document was closed beforehand, this user operation could trigger a renewed launch of this part of an application related to the display of the data file. If in the above case the part of an application responsible for the display of the data file was only put into a sleep-mode, e.g. a window in a closed state, the selection of the respective data file from the modification list could effect reopening the part of the application for displaying the data file from the sleep-mode, e.g. open a corresponding frame or subframe on a display.

The user may then decide how to proceed with the modified and unsaved data file, as outlined before, including saving modifications, discarding modifications or any other operation.

The present embodiment thus facilitates an improved managing of data files and improved user control.

In the following, further examples of the elements of the system shown in Fig 1, are outlined in further detail. It is noted that the following constitutes examples only and should not be construed as limiting the application.

First, the processing unit 110 and the data files 120 are described in further detail.

The processing unit 110 may be constituted by any kind of data processing device, such as a general purpose data processing device, a plurality of interconnected data processing devices, a mobile computing device, a personal data organizer, a mobile communication device including a mobile telephone and similar.

Further, the processing unit 110 preferably has access to the plurality of data files 120, through any kind of internal or external communication link, such as the communication link 130 shown in Fig. 1. The data files 120 may be stored in an internal memory of the data processing unit 110 or in an external memory accessible from the data processing unit. For example, the data processing unit 110 could gain access to the data files 120 through communication networks involving a large number of computers, such as local area networks or the Internet. Further, access to the data files could be obtained through wireless communication links or fixed wired communication links or any other communication means. In any case, standard protocols for accessing and/or retrieving data files over a communication link, e.g. over a communication network, can be employed, such as a HTTP (Hyper Text Transfer Protocol) or similar. Even though Fig. 1 shows a single element 120 illustrating the data files, it is also possible that data files are stored at distributed locations, as this may be the case in a distributed computer network such as the Internet or a local are network.

Furthermore, it is possible that the data files are partially stored at an external location such as a memory unit accessible through an external communication link, while other parts of the data files or data associated with the data files are stored internally to the data processing unit 110, for example on a hard disc, a RAM or similar. In particular, modifications of a data file or a modified copy of a data file could be stored in an internal memory of the data processing unit.

In the following examples of the data file detection unit are described in further detail.

The data file detection unit 111 for detecting at least one modified data file modified since a last saving operation, may be realized as an integral part of the processing unit 110. For example, the data file detection unit could be realized by a central processing unit of the data processing unit and by corresponding software operations, or could be realized as a hardware device, located inside the data processing unit. Further, the data file detection unit 111 may be partially realized in hardware and partially realized in software. Moreover, it is possible that the data file detection unit is partially or entirely arranged at a location external to the data processing unit.

The data file detection unit is arranged to detect at least one modified data file which was modified since a last saving operation. Thus, the detecting unit preferably keeps track of all editing or other modification operations executed. These modifications may result from user interaction or may result from an application program modifying a data file.

For example, if it is assumed that the data file is a text document which is displayed at the data processing unit, the user may edit the text document via input operations through a keyboard, a mouse device or editing instructions.

The data file detection unit detects these modifications instructions, and, upon detecting for example a first modification instruction from a user, the data file modification unit could set a modification indicator such as a flag or similar, indicating that the data file has been modified. Likewise, the date file detection unit could set a flag, if the data file was modified by any other operation, such as from another application or through any other event.

Further, it is possible that a modification indication is set upon detecting a specific instruction, such as a specific character or editing instruction.

Moreover, a modification indication could be set, if editing takes place in predetermined parts of the document or similar, such as in specific partitions belonging to the documents or associated with the documents.

If a user or cooperating application then triggers a saving operation of the data file, instructing to save the modified data file, including the modifications, the modification identifier could be cleared, indicating that the respective data file is not modified since a last saving operation.

Thus, the data file detection unit marks all data files which were modified at all, or determined to be modified in accordance with certain rules.

If thereafter a renewed modification operation takes place, for example as outlined above, the modification indication may again be set, leading to a treatment of the data file as a data file modified since a last saving operation.

In this case, after a saving operation the modified data file could disappear from the modification list and reappear on the modification list after a renewed editing or modification operation.

Further, it is also possible that, in order to avoid a frequent disappearance and reappearance of a data file in the modification list in connection with frequent saving operations, to introduce a certain time delay leading to a delayed disappearance of the data file from the modification list. For example, in the process of writing a text document it may happen that frequent intermediate saving operations are carried out, followed by renewed editing operations a few seconds or fractions of a second following the intermediate saving operation. In this case the time delay for a clearance of the modification indicator or a removal of the modified document from the modification list could be set to e.g. a time delay in the range of 1 second, in order to avoid the above indicated frequent removals and reappearances of the data file in the modification list.

It is noted that, while in the above example the text document was used, any other data file may be employed instead.

In the following examples of the log unit 112 will be outlined in further detail.

The log unit 112 is arranged for maintaining a modification list with an identifier for each modified data file.

Similar to the data file detection unit, the log unit may be realized by a central processing unit in association with corresponding software to realize the functions of the log unit start. Further, the log unit can be realized as a hardware unit included into the data processing unit 110, or the log unit can be partially realized as a hardware unit and partially realized in software. Still further, the log unit can be arranged inside the data processing unit 110 or as an external location, or be partially realized inside the data processing unit and partially realized at an external location. The log unit 112 is preferably connected to the data file detection unit 111 and receives information from the data file detection unit regarding any data file which was modified since a last saving operation.

Upon receiving an indication from the data file modification list, indicating that the data file was modified, the log unit preferably obtains an identifier of the respective data file and includes the identifier of the modified data file into the modification list. The modification list may be any data file or memory partition for storing information related to modified data files e.g. identifiers of the modified data files or any other information related thereto. The modification list 113 may be constituted by or associated with this data file or memory partition storing the identifiers or other information related to the modified data files.

Thus, the modification list 113 is a resource, maintained by the log unit 112, which includes information allowing a user to identify modified data files.

The log unit, upon receiving from the data file detection unit an identification, that a data file has been saved, leading to a clearance of the modification indication, may remove the identifier or other information of the respective data file from the modification list.

Accordingly, the modification list provides a clear indication of all data files being presently modified.

The modification list 113 may be visualized on a display unit, allowing a user to view all modified data files. For this purpose the modification list could include identifiers of the data file such as file names or other identifiers allowing a clear identification of the corresponding data file.

The log unit may further be arranged to order the entries in the modification list. For example, the log unit could categorize the modified data files in accordance with a type of document, such as a text document, video information, image information, graphic information and similar. Further, the log unit may arrange the entries in ascending or descending order in accordance with time of modification.

Categorization according to type of document and ordering in accordance with time of modification could also be combined.

The modification list could be displayed in a frame on a display unit of the data processing unit or could be displayed as a tool-bar, for example, on top or at the bottom of a display screen. Still further, the log unit could be arranged to maintain the modification list active, even if a corresponding window on a display unit is discarded, e.g. through user interaction.

In the example of Fig. 1 the detection unit 111, the log unit 112 and the modification list 123 are shown comprised in the processing unit 113. However, it is also possible that these elements are arranged in a distributed environment, communicating over communication links, such as communication networks, including packet networks such as the Internet, local area networks, dedicated communication links including wireless transmission and similar. Similarly, the data files 120 shown in Fig. 1 may be arranged external to the data processing unit 110, as shown in Fig. 1 or may reside on a memory inside the data processing unit.

It is further noted that the above described elements and/or operations for handling a plurality of data files, including a detection of a modified data file and maintaining a modification list may at least partially be realized as software or hardware. I.e. controls can be carried out using dedicated hardware or a correspondingly programmed data processing device or a group of data processing devices.

Further, it is noted that a computer-readable medium may be provided having a program embodied in their own, where the program is to make a computer or a system of data processing devices execute functions or operations of the features and the elements of the above described examples. A computer-readable medium can be a magnetic or optical or tangible medium on which a program is recorded, that can also be a signal, e.g. analog or digital, electric, magnetic or optical, in which the program is embodied for transmission. Further, a computer program product may be provided comprising the computer-readable medium.

In the following a further embodiment of the application will be described with respect to Fig 2.

Fig. 2 shows operations for handling a plurality of data files according to another embodiment of the application, particularly outlining operations for detecting modified data files and maintaining a modification list.

The embodiment of Fig. 2 enables a user or another application to keep a track of data files modified during a work session. This work session may take place on a single data processing device accessing a data files stored internally or internally, as for example shown in Fig. 1. However, the embodiment of Fig. 2 is not limited thereto.

In a first operation 201 of the method for handling data files, at least one modified data file is detected, which was modified since a last saving operation. As outlined before, a modification may include any kind of modification to a data file, such as an editing operation in case of a text document, for example through keyboard input, or any other kind of user interaction. Further, a modification may be effected through another application, e.g. an application handling a data file and modifying this data file for example an entry in a database being automatically accessed and modified.

The modifications may be detected for example upon writing modification data into an internal buffer, the buffer being arranged for storing the modification of a data file prior to the saving operation. Thus, if data are for example written into the modification buffer, a detection unit such as the data file detection unit of Fig. 1, can detect the occurrence of a modification to the data file.

In an alternate example, as already outlined with respect to Fig. 1, a modification could, however, be indicated upon a certain type of modification operation or a modification operation in a certain part of the data file.

Upon detecting a modification to a data file a modification indicator may be set, indicating to other elements of a system for handling data files, such as the data processing unit of Fig. 1 to be notified upon a presence of a modified data file.

If the modified data file is stored, the modification indicator could again be cleared, indicating that the respective data file was not modified since the last saving operation.

A saving operation may involve writing modification data held in a modification buffer onto a storage location storing the data file. In this case the original version of the data file is overwritten by the modified version of the data file, and, if the modification information is not intermediately stored, the data file may not be recovered.

Thereafter, in an operation 202, a modification list is maintained with an identifier for each of the at least one modified data file detected in operation 201.

As outlined before, the identifier may be a file name or any other information specifying the modified data file, allowing a user or other application to identify and make a call on the modified data file.

This modification list can be presented to a user, notifying the user that there are modified data files which should be taken care of before closing down corresponding applications or similar.

Further, the entries of the modification list may be associated with all modifications made to a corresponding data file and thus can function as a history unit facilitating handling the modifications to the data file.

For example, if a user accidentally discards a frame displaying a data file being currently modified, the data file, e.g. an identifier of the data file, and all modifications could be maintained in association with the modification list. Of course, modification data could, however, also be stored at any other location, accessible upon a user selection of the identifier of the respective data file in the modification list. Accordingly, even if the part of the application displaying the data file is being closed down, the modifications are still maintained available. If, at a later point in time, the user then chooses an option to proceed with the modifications, i.e. discard or save the modifications, the user could select the corresponding data file in the modification list, whereupon the user could be provided with options to save the modifications, discard the modifications or resume modifying the data file.

Thus, the present example facilitates handling of data files by allowing a user to decide on how to proceed with modifications to a data file at any point in time as long as the modification list is accessible.

The modification list, e.g. including the modification data, could be maintained in a random access memory but could also be maintained on a permanent memory, allowing to still access the modification list after a complete shutdown of a data processing unit. Upon resuming operations, the modification list could be reloaded from the permanent storage and displayed to a user, allowing a user to chose how to proceed with the modifications, as outlined above.

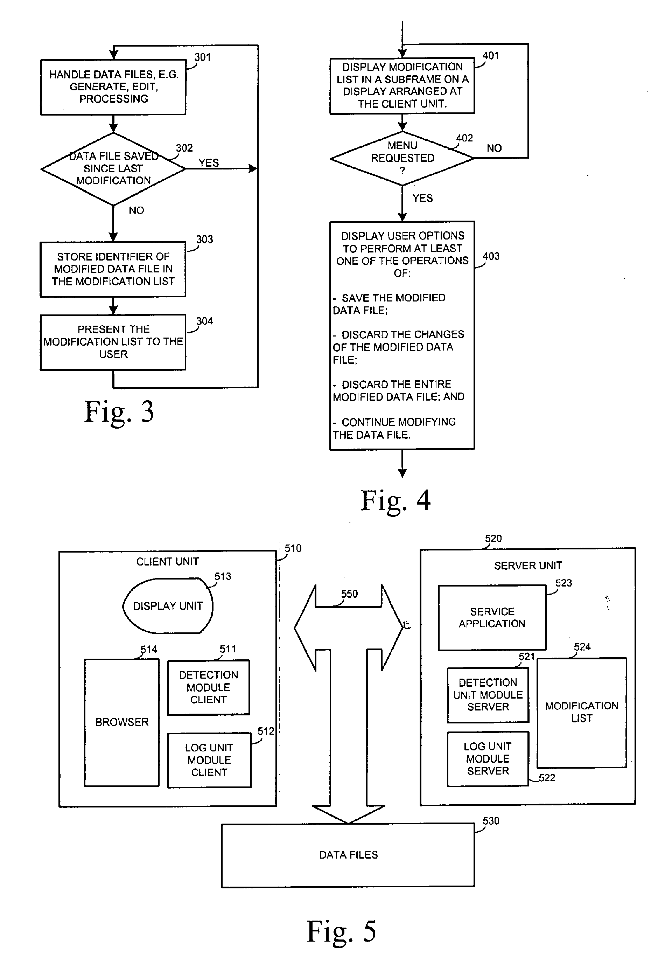

In the following a further embodiment of the application will be described with respect to Fig. 3.

Fig. 3 shows operations for handling a plurality of data files according to an embodiment of the application, particularly outlining operations related to maintaining the modification list. The operations of Fig. 3 may be carried out using the arrangement of Fig. 1, however, the embodiment of Fig. 3 is not limited thereto.

In a first operation or group of operation 301 data files are generally handled, i.e. generated, edited, processed or similar. This may include operations carried out during a regular work session at a data processing unit, such as the data processing unit 110.

More specifically, the operations as 301 may include running text processing applications, applications, any mathematical or scientific applications, communication applications, including distributed applications such as banking applications or applications involving a browser for browsing through information on a communication network.

In association with these applications any type of data files may be generated, i.e. a text document can be written, a spread sheet could be created, images could be generated or imported from other sources, video sequences audio files or the like and similar.

Usually, each of the above data files is stored in a memory location, such as a random access memory, a hard disc, including optical storage and similar. That is, the binary information constituting the data file is stored at the respective locations, where it can be accessed upon demand.

Further, modifications to the above data files take place, if the binary information of the data files is in some way altered or amended i.e. by including amendments into a text document or by altering partitions of a text document or other data file. These modifications are usually not directly saved to the storage location of the data file but may be held in an intermediate memory, allowing a user to undo the modification operations. Thus, the storage partitions storing the data file is not immediately modified upon a modification instruction rather the modification instruction is stored in an intermediate storage. Nevertheless, a display of the data file, i.e. a text document will include the modifications to the data file, even if the data file itself is not yet physically changed. If during handling the data file with one of the above outlined applications a user decides to accept the modifications and wishes to save the data file, he can enter a corresponding command, upon which the modifications will be inserted into the data file, i.e. the binary information at the physical storage location will be physically modified.

During the period of commencing modifying a data file and storing the data file, the data file is in a modified state. If in this state, for example, a part of an application displaying the data file including the modifications is discarded, the modifications to the data file could be lost unless it is known that the data file is being modified and the user is accordingly notified. This task is accomplished in the present embodiment.

Accordingly, in a first operation 302 it is detected whether current data file was saved since a lost modification. If in operation 302 the decision is YES, i.e. the data file was saved since a last modification operation, the flow returns to operation 301, allowing a continuation of the handling operations of the current data file.

If in operation 302 the decision is NO, indicating that the data file was not saved since a last modification operation, in an operation 303 an identifier of the modified data file is stored in a modification list.

The identifier of the data file included in the modification list may be associated with a link to the modified data file. Accordingly, the modification list may only include an address of the storage location of the modified data file. This may include an address of the data file in the form presently at the form of the last saving operation at an address of a storage location storing the modification data.

Thus, the modification list, as also outlined before, keeps a track of all modified data files which were not saved since a last modification operation. By maintaining this information, even if a user or other application handling the data file is not any longer aware of the fact that is the data file was modified, i.e. if a display frame or similar was discarded, information on the modified data files is maintained in the modification list. This allows a user or any other application handling the data file to discard on how to proceed with the modifications at a later point in time, i.e. storing the modifications, discarding the modifications, or resuming editing operations.

In an operation 304 the modification list can be presented to the user, or corresponding information of the modification list can be transmitted to an application handling the data file. If the modification list is, for example, displayed on a display unit of a data processing unit operated by the user, the user readily sees all data files which are in this data of being modified, regardless of the fact whether the data files are currently visible on the display or even discarded.

In the following a further embodiment of the application will be described with respect to Fig. 4.

Fig. 4 illustrates operations for handling a plurality of data files according to another embodiment of the application particularly outlining the user options how to proceed with directed modifications.

The operations of the embodiment of Fig. 4 may be carried out using the device shown in Fig. 1, however, Fig. 4 is not limited thereto.

In an operation 401 a modification list, i.e. as outlined with respect to previous embodiments, is displayed in a subframe on a display arranged at a data processing unit such as the data processing unit shown in Fig. 1. As known in the art, a display may be sub-divided into frames wherein each frame can display information in relation with a particular operation, such as information in association with a particular application or data file. According to operation 401 a frame may be used to display the modification list in a similar manner as other subframes on the display. This may include general options how to display the subframe of the modification list, i.e. size specification, resizing operations, font type color and similar. Further, this may include an option to close the subframe showing the modification list, however, without permanently terminating a corresponding process. At a later point in time the frame with the modification list may again be opened upon a corresponding user input and again show the list of modified documents.

In an operation 402 it is further detected in connection with the sub-frame of the modification list, whether the visualization of a menu allowing further user options is requested.

If in operation 402 the decision is NO, indicating that no menu display is requested, the flow of operations returns to operation 401 continuing a display of the modification list in a subframe of the display.

However, if in operation 402 the decision is YES, indicating that the user requests display of a menu allowing further user options, the flow proceeds to an operation 403 involving the display of user options how to proceed with the modifications to a particular document in the modification list. The menu could, for example, be requested by a corresponding selection of a menu tag displayed in the subframe of the modification list or by any other means.

The user options how to proceed with the modifications may include at least one of:
- Save the modified data file, i.e. safe the modifications to the data file. This will be usually the case if the user is satisfied with the modifications and wants to permanently store the modifications;
- Discard the changes of the modified data file. This will be usually the case if the user decides that the modifications are not satisfying and the modifications will then be discarded, leaving the data file in the original state, i.e. the state of the last saving operation;
- Discard the entire modified data file, i.e. delete the data file from a corresponding memory partition. This option may be chosen if the user decides that the entire data file is no longer needed; and
- Continue modifying data file, i.e. resuming modification operations with the data file. This option will be chosen if the user wants to again display the modified data file opened by particularly if a corresponding display frame was previously discarded and wishes to resume modifying the data file. This can include undoing at least some of the previous modifications, prior to selecting the continue modifying option and may include introducing further modifications.

The embodiment shown in Fig. 4 provides a user with convenient options on how to handle modified data files without running the risk of unintended loss of modification information upon accidental discard instructions with regard to a part of an application display at the data file.

In the following a further embodiment of the application will be described with respect to Fig. 5.

Fig. 5 shows a system for handling a plurality of data files according to another embodiment of the application.

Fig. 5 particularly outlines a client and server arrangement allowing the handling of data files in a distributed environment.

In a distributed environment it is particularly important to maintain information on modified data files as outlined with respect to the previous embodiments as in distributed environments involving the executing of distributed applications it may easily occur that none or parts of the system are always exactly aware of all modified documents. Thus, particularly in a distributed environment, maintaining a modification list including all modified documents proves most useful for providing a user with options how to proceed with modified data files while avoiding a loss of modifications.

Fig. 5 illustrates a client unit 510 including a client side detection module 511 a client side log module 512 and a display unit 513. Further, the client unit includes a browser application 514. Still further, the embodiment of Fig. 5 shows a server unit 520 including a service application 523 for handling a data file, a server side detection module 521 and a server side log module 522 and a modification list 524. Data files of any type or format are illustrated at 530.

An arrow 550 illustrates a network connection or any other communication link between the respective elements of the system shown in Fig. 5.

The client unit 510 and the server unit 520 cooperate in handling data files, such as a text document, a spread sheet file, images, video sequences, audio sequences or similar.

The data files may be handled by the service application 523 located at the server unit. The service application 523 may be remotely controlled by a user through instructions entered at the client unit 510 and transmitted to these server unit 520

Without being limited thereto, it is assumed for the following that a text document is handled by a text processing application. It is noted that any other data file type and application may be used instead.

The text processing application is preferably located at the server unit 520, while the text document is displayed and handled at the client unit 510. For displaying and handling the data file an application cooperating with the text processing application may be provided at the client unit 510. This visualization on handling application may be realized by the browser application 514 or any other handling application residing at the client unit.

As an example, in the following it is further assumed that a display and handling application executed at the client unit is a browser application. A browser application, as known in the art, can be any program or group of application programs allowing a convenient browsing through to information or data available in distributed environments such as on the Internet or any other network including local area networks. A browser application generally allows to view, download data and allows to transmit data between data processing devices. Further, a browser application, appropriately configured or equipped with appropriate amendments or application modules, sometimes termed plug-ins, may be enhanced with further functionality to access or process specific kinds of information available in a distributed system such as text documents, video information, audio information and any other kind of information in specialized formats.

A plug-in may generally be a piece of software which may be added to any kind of larger software application, such as a browser application, the above exemplary text processing application or any other service application. A plug-in adds a defined functionality to the larger software application, for example visualization capabilities for certain types of documents, specific processing capabilities or similar. A plug-in may be added to the larger software application generally at any desired time, provided that the larger software application is equipped to receive and integrate the plug-in. The code for the plug-in may be obtained from any source, such as over a computer network, from a data storage medium or similar. Alternatively, a plug-in may also be a piece of hardware adding functionality to an application or larger hardware structure.

A browser application such as the browser 510 shown in Fig. 5 may be used to view the text document of the above example. This could be achieved by, i.e. clicking on a link in a browser frame, the link constituting an identifier of the text document. In this case, if the browser is equipped with the appropriate remote visualization protocol or runtime environment component service, the data file may be retrieved from an arbitrary storage location, appropriately rendered by the text processing application located at the server unit and displayed at the client unit in a browser frame on the display unit 513.

A remote visualization protocol or runtime environment component service to ensure convenient access from a first computer system to resources available at a second computer system may, in the present example, be any application or group of applications or modules which enable a user at a client unit to communicate with a server unit and view information provided by the server unit. For example, a remote visualization protocol or runtime environment component service may enable a user connect to the server unit, to control the execution of an application such as the above exemplary text processing application at the server unit and to view processing results such as an edited text document. A remote visualization protocol or runtime environment component service may cooperate with a browser application to provide the above functionality.

An example of a runtime environment component service is disclosed in the European patent application EP01100136.9, entitled "Runtime Environment Component Services" and filed January 15, 2001, which is incorporated herein by reference.

Thus, if the browser is equipped with the appropriate remote visualization protocol or runtime environment component service and/or extension programs, e.g. plug-ins, a user may be enabled to view and modify the data file displayed in the subframe on the display unit 513. For editing purposes a user could locate a cursor at a desired text location and enter characters through a keyboard. Modifications to the data file would then be displayed at the client unit, i.e. in the subframe displaying the data file. The modifications could further be stored locally at the client unit or at the server unit in association with the data file and unless a saving operation occurs, the original form of the data file could be maintained. Accordingly, a user editing the text document of the above example would be able to view, through use of a browser, the text document in the modified form and could further be enabled to undo previous modifications or redo previous modifications.

Particularly in such a browser environment it may happen that due to a user action operations in connection with editing the document are terminated. In this case the browser application or other handling application would unload any associated additional software such as plug-ins and could discard a frame on the display unit. Since the browser application or other handling operation may not be aware of the fact that a data file such as the above text document is still being modified without the modifications being saved, the user may be unable to specify whether the modification should be saved or discarded.

Presenting such saving - discard - or additionally cancel options in a browser and plug-in environment may not be possible, since a communication between the browser and the plug-in does not present such an option.

Thus, if the user loads a new page into the browser, i.e. a new data file or information element, or reloads a previously loaded page again, such as the page corresponding to the text document, or completely closes the browser frame, there is the potential threat that at least part of the modification work is being lost. However, this is only a problem in a prior art scenario.

According to the present embodiment, as also indicated in the previously described embodiments, data files may be handled without running the risk to lose at least part of introduced modifications.

To keep track of all modified documents, the embodiment shown in Fig. 5 shows a client side detection module 511 and a server side detection module 521. Both modules provide the required functionality for detecting any modifications or specific modifications, as outlined above. While Fig. 5 shows a corresponding module at the client side end at the server side, it is possible that the data file detection functionality is entirely located at the client unit 510 or at the server unit 520. The client side detection module 511 and the server side detection unit 521 may be arranged to realize the functionality as outlined with respect to the data file detection unit of the previous embodiments.

Further, Fig. 5 included the client side log module 512 and the server side log module 522 for realizing the functionality to maintain the modification list 524. As before, a log unit may be located entirely at the client side or at the server side, i.e. corresponding functionality may be realized entirely at the client side or server side. The client side log module and the server side log module may be arranged to realize the functionality of the log unit as outlined with respect to previous embodiments. All modified documents, or more specifically identified, of all modified data files, may be included into the modification list 524.

The modification list 524 even though it is shown as part of the server unit 520 in Fig. 5, may also be located at the client unit 510 or at any other location.

Further, it is possible that the client unit 510 and/or the server unit 520 are constituted by distributed data processing devices. For example, a plurality of server units could be arranged to cooperate with a plurality of client units. Further, a plurality of users operating a plurality of client units may access a plurality of server units to obtain services as outlined above.

The data files, as indicated at reference numeral 530 may be located at an arbitrary location, accessible by the client unit and/or the server unit. As outlined with respect to Fig. 1, the data files may also be located on a plurality of devices, i.e. in a communication network such as the Internet or a local area communication network.

During operation, each modified document may be included into the modification list, as outlined before. However, it is also possible that a modified document is only then included into the modification list, if a corresponding display frame at the client unit is discarded. Thus, documents which are currently visible or still actively accessible at the client's unit may not be displayed in the modification list.

Each document in the modification list may be selected, and options may be presented to a user or many other application handling a data file, to either save the modifications, discard the modifications or continue editing, in which case the data file will again be opened in a display frame at the client unit.

The identifier in the modification list specifying a modified document may be constituted by a file name of the modified data name, for convenient reference. Further, the identifier may be associated with a link to the modified data file, i.e. a link to the data file and/or the intermediately stored modifications. This link to the modified data file may be constituted by a URL (Uniform Resource Locater), and thus for accessing the data file Internet protocols may be used.

The above described embodiment allows improved handling options for data files in a distributed environment, allowing a user to decide on how to proceed with modifications and virtually an arbitrary point in time.

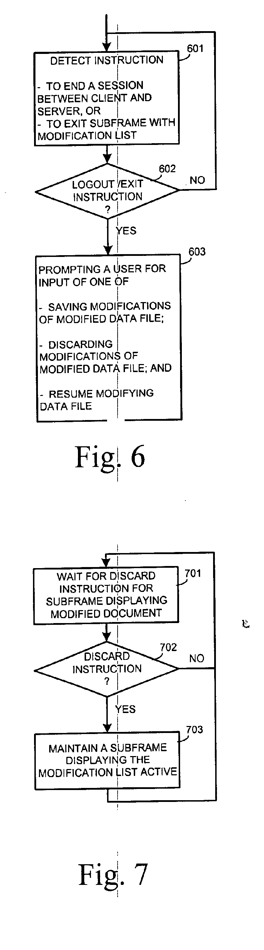

In the following, a further embodiment of the application may be discussed with respect to Fig. 6.

Fig. 6 outlines operations for handling a plurality of data files according to an embodiment of the application, particularly outlining options upon a log out or exit operation closing down a connection between a server unit and a client unit involved in handling a data file.

The operation shown in Fig. 6 may be carried out using the system shown in Fig. 5, however, in Fig. 6 is not limited thereto.

In a first operation 601, e.g. the client unit shown in Fig. 5, waits for an instruction to end a session between a client unit and a server unit. This could be a log out instruction specifying that a user wants to close down a connection from the client unit to the server unit. Further, the client unit waits for an instruction to exit a subframe displaying the modification list. Such an instruction could involve discarding a subframe on a display unit showing the'modification list.

In an operation 602 the occurrence of such a log out/exit instruction is determined. If in operation 602 the decision is NO, indicating that no log out or exit instruction occurred, the flow returns to operation 601.

If in operation 602 the decision is YES indicating that a log out or exit instruction is detected, the user is prompted for input of one of the following options:
- to save the modifications of the modified data file. In this case the modifications will be written on e.g. a memory partition of the data file;
- to discard the modifications of the modified data file, in which case the data file will be maintained in the original form, i.e. the form present at the last saving operation; and
- resume modifying the data file. In this case the data file will again be displayed at the client unit , i.e. in a sub-frame or browser frame on the display unit as shown in Fig. 5, allowing the user to continue editing, including undoing or redoing modifications.

The user options may be displayed in yet another subframe on the display unit with selectable buttons corresponding to the respective options.

The embodiment described with respect to Fig. 6 avoids a loss of modifications, or corresponding the forced storage of a modifications to the data files upon a log out instruction initiated by for example a user being unaware of the existence of modified data files. The communication session may thus come to a defined end, with all modifications being either saved or discarded.

In the following a further embodiment of the application will be described with respect to Fig. 7.

Fig. 7 shows another embodiment for handling a plurality of data files, particularly outlining operations to proceed upon a discard instruction regarding a modified document.

In a first operation 701 it is waited for a discard instruction with regard to a subframe displaying a modified document. For example a user being in the process of modifying a data file in a subframe displayed at a client display, such as the client display shown in Fig. 5 could enter a discard instruction by actively canceling a subframe displaying the modified document, where, if used in connection with a browser application, as outlined with respect to Fig. 5 could move back or forward in a page history, which would also lead to an equivalent of a discard instruction as upon a forward or reverse scrolling operation to pages each page not being active is discarded.

In an operation 702 it is then determined whether a discard instruction occurred. If in operation 702 of the decision is NO, indicating that no discard instruction occurred the flow returns as to 701.

If in operation 702 the decision is YES, indicating that a discard instruction occurred, in an operation 703 a subframe display the modification list is maintained active. Accordingly, the modification list is continued to be displayed on for example a display unit at a client unit such as outlined with respect to Fig. 5. If thereafter the user selects the current data file, e.g. a modified document in the modification list, a subframe with the modified data file would be again opened at the client unit.

Thus, the embodiment described with respect to Fig. 7 allows to maintain a subframe with the modification list active if a subframe of a client unit displaying the modified data is discarded and to open a subframe with the modified data file again at the client unit upon a selection of a link to the modified data file in the modification list.

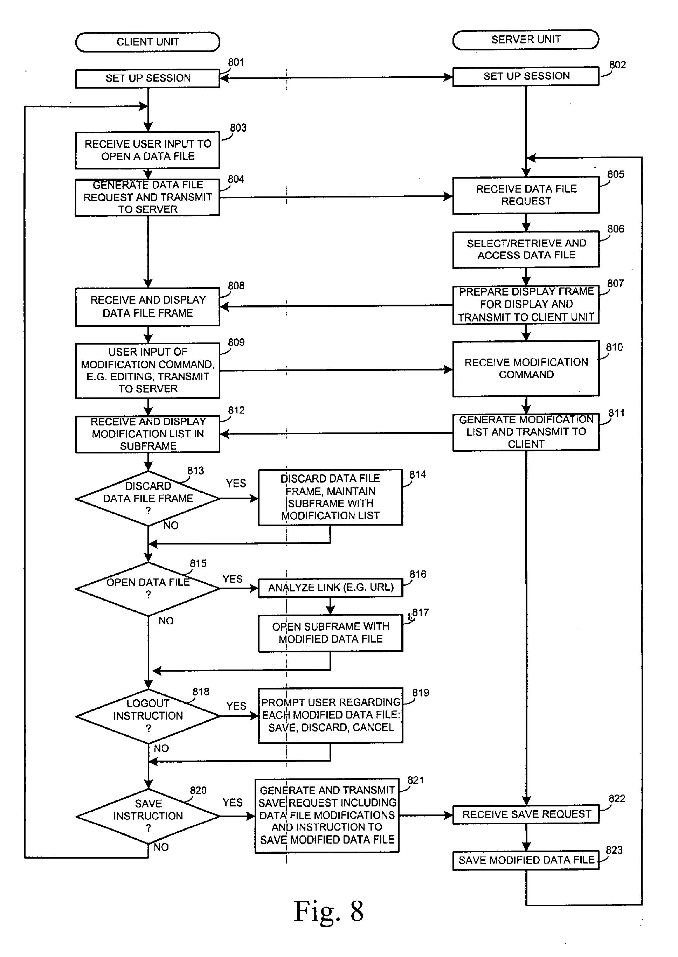

In the following a further embodiment of the application will be described with respect to Fig. 8.

Fig. 8 shows a further embodiment of operations for handling a plurality of data files, as they may be carried out in a client and server scenario. The operation shown in Fig. 8 may be carried out using the system shown in Fig. 5, however, Fig. 8 is not limited thereto.

In two initial operation 801 and 802 at the client unit and at the server unit, respectively, a communication session is initiated. This may be accomplished as known in the art, for example by establishing a communication link through a communication network such as the Internet.

After the communication session between the client unit and the server unit is established, in an operation 803 a user input to e.g. open a data file is received. The data file, as in previous embodiments, may, as an example, be a text document which is intended to be modified. The data file may be located at the server unit and thus may not be locally available at the client unit.

In an operation 804 at the client unit a data file request is generated and transmitted to the server unit over the communication link and the data file request is received at the server unit in an operation 805.

In an operation 806 the data file is selected based on information contained in the data file request or retrieved and accessed.

In the present example of handling a text document, access may be accomplished through a text processing application located at the server unit.

In an operation 807 the server unit may prepare an appropriate display frame for display at the client unit and transmit same to the client unit. The display frame may include providing the text document in an appropriate size and resolution, adapted to the display capabilities of the client unit. In an operation 808 the data file frame is received and displayed at the client unit. This may involve displaying the frame on a display unit, as outlined before.

In an operation 809 the user inputs a modification command e.g. an editing command which is transmitted to the server unit. The modification command may involve amending or modifying the text document, as outlined before.

In an operation 810 the modification command is received at the server unit and in an operation 811 a modification list is generated, as outlined before. The modification list preferably includes an identifier of the data file, including a link to the data file. Then, the list is transmitted to the client.

The modification list is received at the client unit in an operation 812 and displayed in a subframe on a display unit at the client unit.

It is noted that, while in the present embodiment it is again assumed that the data file is a text document any other file type or application could be used instead.

Further, while in the present example it is assumed that the modification list is generated at the server unit, it is also possible that the modification list is generated at the client unit. Further, while in the present embodiment it is assumed that the data file is accessed at the server unit, it is also possible that the data file is accessed directly from the client unit.

In an operation 813 it is determined whether a data file frame discard operation occurs. If in operation 813 decision is YES, indicating that data file frame command occurred, the data file frame is discarded while the subframe with the modification list is maintained active, as outlined with respect to Fig. 7. Thus, even if a data file frame is discarded e.g. through browser operation or a direct instruction from a user, the modification list is still available, allowing to still attend to the modifications.

If an operation 813 decision is NO, indicating that a discard data frame instruction did not occur, it is detected in an operation 815 whether a command was input for opening the data file.

If an operation 815 decision is YES, indicating that a data file open command occurred, e.g. by clicking on an identifier of one of the data files in the modification list displayed at the client unit, in an operation 816 a link associated with the identifier, e.g. a URL is analyzed at the client's unit.

Thereafter, in an operation 817 a subframe with the modified data file is opened and displayed at the client unit. While in the present example it is assumed that the link is analyzed in an operation 816 at the client unit it is also possible that the link is analyzed at the server unit and the opening of the subframe with the modified data file is handled at the server unit.

If in operation 815 the decision is NO, indicating that a data file opening command did not occur, in an operation 818 it is detected whether a logout instruction occurred.

If in operation 818 a logout instruction occurred, an operation 819 a user is prompted regarding each modified data file to indicate whether to save, discard or cancel operations as outlined before, particularly with respect to Fig. 6.

If in operation 818 the decision is NO, indicating that a logout instruction did not occur, it is determined in an operation 820 whether a save instruction was entered. If in operation 820 the decision is YES, indicating that a save instruction was entered, a save request is generated and transmitted to the server unit, including e.g. data file modifications and an instruction to save the modified data file. Alternatively, it is also possible that solely a save request is transmitted to the server unit, for example if modifications of the data file are already maintained at the server unit.

In an operation 822 the save request is received at the server unit and the modified data file is saved, i.e. the modifications are written to the data file in an operation 823.

Thereafter, the flow of operations returns to operation 803 at the client unit and to operation 805 at the server unit, respectively.

It is noted that the above operations are an example only, different sequences or further operations may be present in further embodiments.

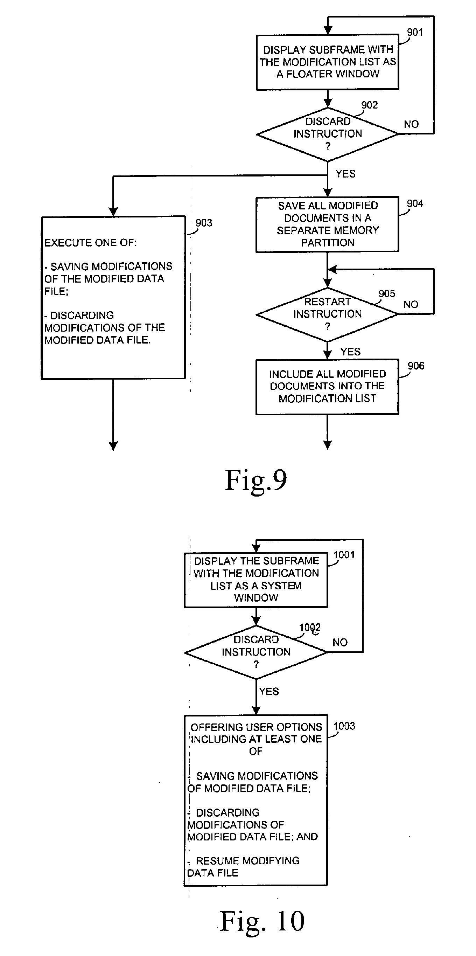

In the following a further embodiment of the application will be described with respect to Fig. 9.

Fig. 9 shows operations of another embodiment of the application, particularly outlining options to proceed in connection with a discard instruction.

The operations of Fig. 9 may be carried out by one of the devices of Figs. 1 and 5, however, Fig. 9 is not limited thereto.

In a first operation 901 it is assumed that a subframe with the modification list is displayed at a data processing device such as the data processing device of Fig. 1 or a client unit such as the client unit of Fig. 5. This displayed subframe may be a floater window, i.e. a window associated with an application program such as a browser application or any other application for handling modification of a data file. Such an application or browser may be an application which can be independently launched or terminated. For example, the floater window could be a window maintained by a browser application such as a subwindow depending on a process in correspondence with the browser application. If the browser application is terminated, the floater window would also be terminated.

In an operation 902 it is determined whether a discard instruction occurs. The discard instruction, as outlined before, may occur in connection with a explicit discard instruction from a user or may, implicitly, occur with a user moving forward or backward in a browser history.

If an operation 902 decision is NO the flow returns to operation 901.

If an operation 902 the decision is YES, indicating that a discard instruction occurred, two options are present. First, in an operation 903 a user may be prompted to input an instruction regarding one of
- save the modifications of the modified data file; and
- discard modifications of the modified data file.

These user options could be presented through specific software included into the browser application such as plug-ins or java applets.

If inclusion of specific software extensions are undesirable, as a second alternative in an operation 904 all modified documents may be saved at a separate memory partition. Thus, if further software tools for the floater window are undesirable, by default modified documents can be saved in a separate memory partition. Alternatively, only the modifications and exact information with respect to all modification operations can be saved. Thus, the document in the original form and the modification information is maintained.

Thereafter, an operations 905 it is determined whether a restart instruction occurs. If an operation 905 a restart instruction did not occur, it is continued to wait for restart instruction. If a restart instruction is entered, e.g. a power button is pressed, in operation 906 a modification list is again generated including all modified documents, including the modified documents saved by default in operation 904.

Accordingly, the embodiment of Fig. 9 allows to display a subframe with the modification list as a floater window or browser window and to execute, upon a discard instruction, one of
- saving modifications of the modified data file; and
- discarding modifications of the modified data file.

Thus, the system may be configured, e.g. by the user, to save all modifications by default upon a discard instruction, or to discard all modifications by default. Accordingly, even if the modification list is displayed in a floater window, or a browser window, i.e. a window which is associated with an application program and thus shares the fate of the application program, the user or other instance can still pre-define a default save operation or a default discard operation of modifications upon removing the modification list or application program.

Further, as an alternative thereto, all modified documents may be saved upon a detection of a discard instruction in a separate memory partition and upon a later restart operations of modified documents may again be included into a modification list.

Accordingly, even in the above cases of e.g. shutting down a computer, it can be avoided that any modifications may be lost. Further, the user may thus decide at a later point in time, e.g. after re-establishing communications, to save or discard modifications.

In the following a further embodiment of the application will be discussed with regard to Fig. 10.

Fig. 10 shows operations of an embodiment of the application for handling a plurality of data files, particularly outlining further options upon discard instructions.

In a first operation 1001 a subframe with a modification list is displayed as a system window. The modification list may be constituted as outlined before. The system window preferably is a window in association with an operating program i.e. operating a client unit as outlined with respect to Fig. 5. Thus, the modification list is presented on a system level, allowing to provide a specific software tools for handling modifications upon a discard instruction.

In an operation 1002 it is determined whether a discard instruction occurs. If in step 1002 the decision is NO, indicating that a discard instruction did not occur, the flow returns to operation 1001.

If an operation 1002 is YES, indicating that a instruction occurred, in an operation 1003 the following user options may be presented:
- save all modifications of the modified data file;
- discard all modifications of the modified data file; and
- resume modifying the data file.

Corresponding functionality as outlined with respect to previous embodiments.

The embodiment described with respect to Fig. 10 allows a defined closing operational upon a discard instruction in association with the modification list, since the modification list is displayed as a system window maintained by an operating system such as an operating system for the data processing unit of Fig. 1 or the unit of Fig. 5.

According to a further example, a processing unit may have the following elements.
1). Processing unit for handling a plurality of data files, including:
   a code section including instructions to detect at least one modified data file which was modified since a last saving operation; and
   a code section including instructions to maintain a modification list with an identifier for each of the at least one modified data file.
2). Processing unit according to 1), including a code section including instructions to record the identifier of the modified data file in the modification list and a code section including instructions to present the modification list to a user upon detecting the modified data file.
3). Processing unit according to 1), wherein the identifier includes a link to the modified data file.
4). Processing unit according to 1), including
   a code section including instructions to communicate with a browser for browsing through data in a network of data processing devices;
   wherein the identifier is constituted by a file name of the modified data file; and
   the link to the modified data file is constituted by a URL.
5). Processing unit according to 1), including a code section including instructions to effect displaying the modification list in a subframe on a display.
6). Processing unit according to 1), including a code section including instructions to offer, in association with the subframe displaying the modification list, user options to perform at least one of the operations of:
   - save the at least one modified data file;
   - discard the changes of the at least one modified data file;
   - discard the entire modified at least one data file; and
   - continue modifying the at least one data file.
7). Processing unit according to 1), including a code section including instructions to display the subframe with the modification list as a floater window or browser window, and a code section including instructions execute, upon a discard instruction, one of
   - saving modifications of the at least one modified data file;
   - discarding modifications of the at least one modified data file.
8). Processing unit according to 1), including code sections including instructions to
   save all modified documents upon detection of a discard instruction in a separate memory partition; and
   to include all modified documents into the modification list upon a later restart operation.
9). Processing unit according to 1), including a code section including instructions to display the subframe with the modification list as a system window, and a code section including instructions to offer, upon a discard instruction, user options including at least one of
   - saving modifications of the at least one modified data file;
   - discarding modifications of the at least one modified data file; and
   - resume modifying the at least one data file.
10). Processing unit according to 1), including a code section including instructions to prompt a user upon a logout instruction for ending a work session, to instruct one of
   - saving modifications of the at least one modified data file;
   - discarding modifications of the at least one modified data file; and
   - resume modifying the at least one data file.
11). Processing unit according to 1), wherein the processing unit is located at a server side and remotely communicates with a client side.
12). Processing unit according to 1), wherein the data files are located at the server side and remotely handled by a user operating the client side.
13). Processing unit according to 1), including
   a code section including instructions to maintain a subframe with the modification list active, if a subframe displaying the modified data file is discarded; and
   a code section including instructions to open a subframe with the modified data file upon a selection of the link to the modified data file.

## Claims

1. Processing unit for handling a plurality of data files, including:
a data file detection unit for detecting at least ones modified data file which was modified since a last saving operation; and
a log unit for maintaining a modification list with an identifier for each;of the at least one modified data file.

2. Processing unit according to claim 1, wherein the log unit is arranged to record the identifier of the modified data file in the modification list and to present the modification list to a user upon detecting the modified data file.

3. Processing unit according to at least one of the claims 1 and 2, wherein the identifier includes a link to the modified data file.

4. Processing unit according to at least one of the claims 1 - 3, arranged to communicate with a browser for browsing through data in a network of data processing devices;
wherein the identifier is constituted by a file name of the modified data file; and
the link to the modified data file is constituted by a URL.

5. Processing unit according to at least one of the claims 1 - 4, wherein the log unit is arranged to effect displaying the modification list in a subframe on a display.

6. Processing unit according to at least one of the claims 1 - 5, wherein the log unit is arranged to offer, in association with the subframe displaying the modification list, user options to perform at least one of the operations of:
- save the at least one modified data file;
- discard the changes of the at least one modified data file;
- discard the entire modified at least one data file; and
- continue modifying the at least one data file.

7. Processing unit according to at least one of the claims 1 - 6, wherein the log unit is arranged to display the subframe with the modification list as a floater window or browser window, and for executing, upon a discard instruction, one of
- saving modifications of the at least one modified data file; and
- discarding modifications of the at least one modified data file.

8. Processing unit according to at least one of the claims 1 - 7, wherein the log unit is arranged to save all modified documents upon detection of a discard instruction in a separate memory partition; and to include all modified documents into the modification list upon a later restart operation.

9. Processing unit according to at least one of the claims 1 - 8, wherein the log unit is arranged to display the subframe with the modification list as a system window, and to offer, upon a discard instruction, user options including at least one of
- saving modifications of the at least one modified data file;
- discarding modifications of the at least one modified data file; and
- resume modifying the at least one data file.

10. Processing unit according to at least one of the claims 1 - 9, wherein the log unit is arranged to prompt a user upon a logout instruction for ending a work session, to instruct one of
- saving modifications of the at least one modified data file;
- discard modifications of the at least one modified data file; and
- resume modifying the at least one data file.

11. Processing unit according to at least one of the claims 1 - 10, wherein the processing unit is located at a server side and remotely communicates with a client side.

12. Processing unit according to at least one of the claims 1 - 11, wherein the data files are located at the server side and remotely handled by a user operating the client side.

13. Processing unit according to at least one of the claims 1 - 12, wherein the log unit is arranged to maintain a subframe with the modification list active, if a subframe displaying the modified data file is discarded; and
to open a subframe with the modified data file upon a selection of the link to the modified data file.

14. Method for handling a plurality of data files, including:
detecting at least one modified data file which was modified since a last saving operation; and
maintaining a modification list with an identifier for each of the at least one modified data file.

15. Method of claim 14, including, upon detecting the modified data file,'storing an identifier of the modified data file in the modification list and presenting the modification list to the user.

16. Method of at least one of the claims 14 and 15, wherein the identifier includes a link to the modified data file.

17. Method of at least one of the claims 14 - 16, including
operating a browser for browsing through data in a network of data processing devices;
wherein the identifier is constituted by a file name of the modified data file; and
the link to the modified data file is constituted by a URL.

18. Method of at least one of the claims 14 - 17, including displaying the modification list in a subframe on a display.

19. Method of at least one of the claims 14 - 18, including offering, in association with the subframe displaying the modification list, user options to perform at least one of the operations of:
- save the at least one modified data file;
- discard the changes of the at least one modified data file;
- discard the entire modified at least one data file; and
- continue modifying the at least one data file.

20. Method of at least one of the claims 14 - 19, including displaying the subframe with the modification list as a floater window (application Programminternes Fenster) or browser window; and, upon receiving a discard instruction, for executing one of
- saving modifications of the at least one modified data file; and
- discarding modifications of the at least one modified data file.

21. Method of at least one of the claims 14 - 20, including,
upon detecting a discard instruction, saving all modified documents in a separate memory partition; and
upon detecting restart instruction; and inserting all modified documents into the modification list.

22. Method of at least one of the claims 14 - 21, including displaying the subframe with the modification list as a system window; receiving a discard instruction and offering user options including at least one of
- saving modifications of the at least one modified data file;
- discarding modifications of the at least one modified data file; and
- resume modifying the at least one data file.

23. Method of at least one of the claims 14 - 22, including detecting instruction to end a session between client and server; prompting a user for input of one of
- saving modifications of the at least one modified data file;
- discarding modifications of the at least one modified data file; and
- resume modifying the at least one data file.

24. Method of at least one of the claims 14 - 23, including communicating with a client side for user interaction.

25. Method of at least one of the claims 14 - 24, wherein the modified data file is located at a server side and displayed at the client side.

26. Method of at least one of the claims 14 - 25, including maintaining a subframe displaying the modification list active, if a subframe displaying the modified data file is discarded; and opening a subframe with the modified data file upon a selection of the link to the modified data file.

27. A program having instructions adapted to carry out the method of at least one of the claims 14 - 26.

28. A computer readable'medium, in which a program is embodied, where the program is to make a computer execute the method of one of the claims 14 - 26.

29. A computer program product comprising the computer readable medium according to claim 28.
